# EUROPEAN PATENT SPECIFICATION

(11) **EP 2 045 127 B1**
(45) Date of publication and mention of the grant of the patent: **15.09.2010**
(21) Application number: 08017228.1
(22) Date of filing: 30.09.2008
(51) Int. Cl.: B60Q 1/52, B62K 5/00, A61G 5/04

(54) **Small-sized motorized vehicle**
Kleines Kraftfahrzeug
Véhicule motorisé de petite taille

(30) Priority: 04.10.2007 JP 2007260720
(43) Date of publication of application: 08.04.2009
(73) Proprietor: HONDA MOTOR CO., LTD., Tokyo 107-8556 (JP)
(72) Inventor: Yaguchi, Tadahiro, Wako-shi Saitama, 351-0193 (JP); Fukuzumi, Yasumi, Wako-shi Saitama, 351-0193 (JP); Azuma, Koichi, Wako-shi Saitama, 351-0193 (JP)
(74) Representative: Prechtel, Jörg

(56) References cited:
- EP-A- 1 374 707
- WO-A-2006/041002
- DE-U1-202004 001 082
- GB-A- 2 374 272
- JP-A- 61 119 445
- US-A- 5 072 339

## Description

The present invention relates to a small-sized motorized vehicle that is capable of traveling on sidewalks and used as a motorized wheel chair or other transportation means for elderly or other people.

Some small-sized motorized vehicles include wheelchairs and are known to have improved visibility to pedestrians and nearby vehicles.

Small-sized motorized vehicles of this kind typically have turn indicators and reflectors attached to the sides of the vehicle and blinking LEDs and reflectors attached to the rear of the vehicle in order to ensure lateral and rearward visibility.

JP-A 2003-190224 and JP-A 2004-275580 disclose small-sized motorized vehicles equipped with members for further improving the visibility of the vehicles.

In the small-sized motorized vehicle disclosed in JP-A 2003-190224, an electric motor and a battery are mounted on a vehicle body frame to which wheels and a seat are attached, and the electric motor drives the wheels. A pole unit is provided at the rear of a seatback of the seat, the pole unit operated in response to key operation or manual switch operation and extendable vertically or in a direction substantially parallel to the seatback. Light emitting means is provided at the tip of a pole of the pole unit. The light emitting means is a light emitting device that intermittently emits light. The light emitting means receives electricity from the battery when the pole is extended.

The small-sized motorized vehicle disclosed in JP-A 2004-275580 includes a blinking warning light, and a lighting body of the warning light is attached to a seat via a pole extendable to a position higher than the head of a vehicle occupant. The lighting body has a spherical shape that is formed in such a way that the upper half of the lighting body reflects externally irradiated light and the lower half of the lighting body transmits light.

However, each of the small-sized motorized vehicles disclosed in JP-A-2003-190224 and JP-A-2004-275580 is of a restricted size; i.e., it is smaller than 109 cm in height, 70 cm in width, and 120 cm in total length. It is therefore difficult, for example, to effectively attach reflectors and lights and provide a long pole.

Further, the small-sized motorized vehicles described above, which travel at speeds slower than those at which nearby vehicles (automotive vehicles and other vehicles) travel, are often overtaken by the nearby vehicles when traveling, and take a long time to cross an intersection and a road. It is therefore desired to further improve the visibility of such small-sized motorized vehicles.

WO 2006/041002 A shows a small-sized motor vehicle in accordance with the preamble of claim 1.

In JP 61 119445 A, only one light-emitting element 1 is shown for irradiating the back of the motor cycle driver.

US-A-5072339 shows a similar device with a plurality of illuminating devices for irradiating the back of a motor cycle driver. There, however, the illumination direction of the plurality of lights is substantially the same - even if the light of each light source forms a diverging beam, as shown in Fig. 3. Figs. 21, 22A and 22B show an embodiment, wherein the illumination lamp is rotatable between a forward position to illuminate the back of the rider and a rearward position to illuminate a document on a document box.

An object of the invention is to provide a small-sized motorized vehicle that not only has improved visibility in consideration of the peculiarity that the vehicle is of a restricted size; i.e., is smaller than 109 cm in height, 70 cm in width, and 120 cm in total length; but also can warn pedestrians and drivers of nearby vehicles in accordance with the conditions of the situations through which the vehicle travels.

The object is achieved by a small-sized motorized vehicle according to claim 1.

The small-sized motorized vehicle (motorized wheel chair) of the invention is of a restricted size; i.e., is smaller than 109 cm in height, 70 cm in width, and 120 cm in total length. The irradiating means attached to the seatback of the seat or a portion close to the seatback can irradiate the vehicle occupant to show the contour of the vehicle occupant clearly and make the small-sized motorized vehicle larger in appearance. As a result, the driver of a nearby vehicle can easily find the small-sized motorized vehicle. That is, the visibility of the small-sized motorized vehicle can be improved without affecting the layout of other parts within the restricted vehicle size.

The irradiating means is formed from a plurality of light-emitting elements.

By using a plurality of light-emitting elements (LEDs) with changeable orientation of the irradiation, the entire area of the back of the vehicle occupant can be irradiated to be a clearly visible from the rear side.

Preferably, the small-sized motorized vehicle of the invention further comprises nearby vehicle detecting means for detecting a vehicle near the motorized vehicle, the nearby vehicle detecting means being provided on the vehicle body; wherein the nearby vehicle detecting means changes the illumination state of the irradiating means on detecting that the nearby vehicle has encroached to within a predetermined range around the motorized vehicle. It is thus possible to enhance the present of the small-sized motorized vehicle.

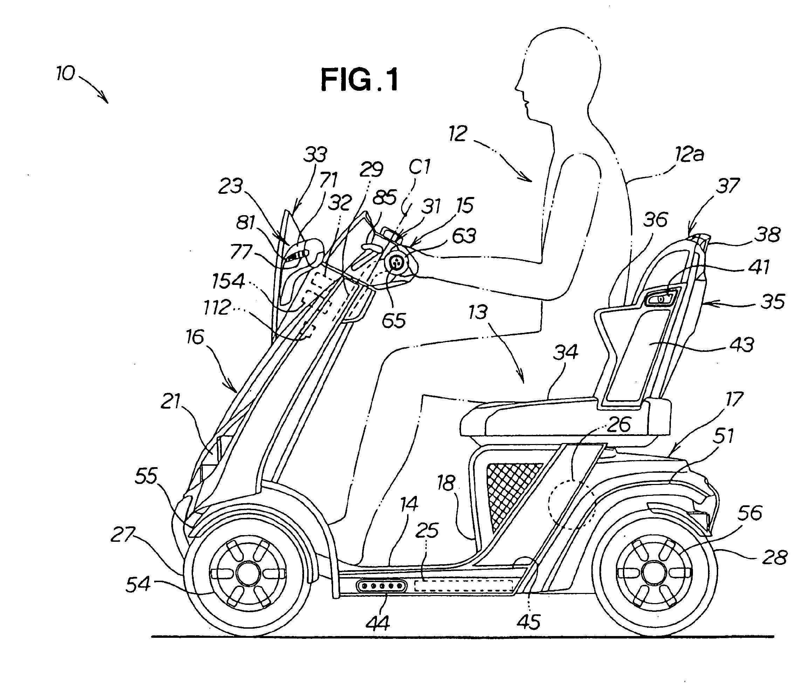

A preferred embodiment of the invention will be described below in detail with reference to the accompanying drawings, in which
Fig. 1 is a side view of a small-sized motorized vehicle according to the invention;

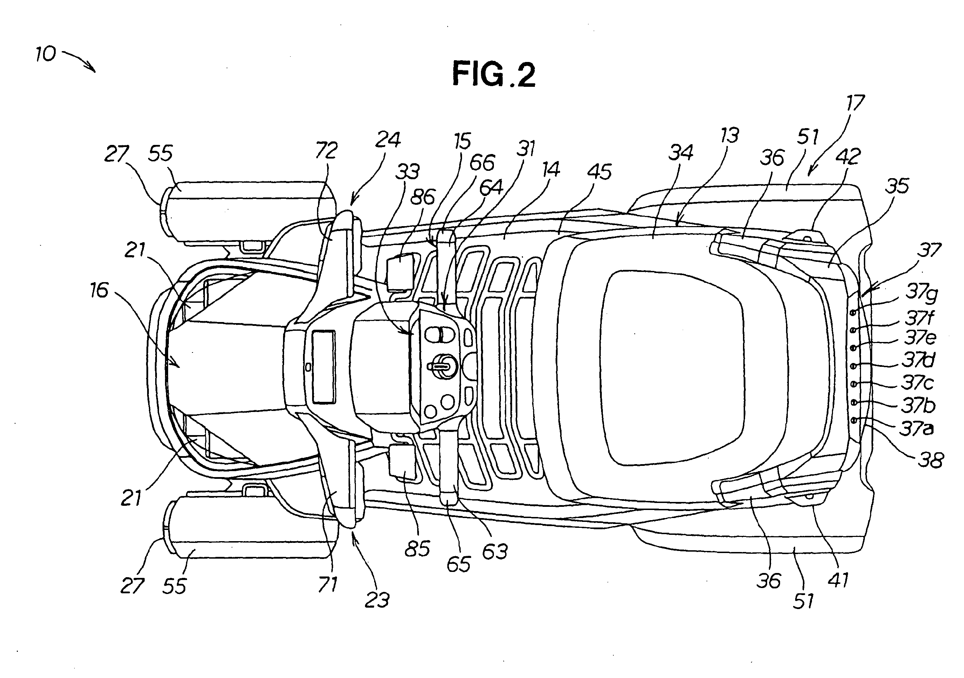

Fig. 2 is a plan view of the small-sized motorized vehicle shown in Fig. 1;

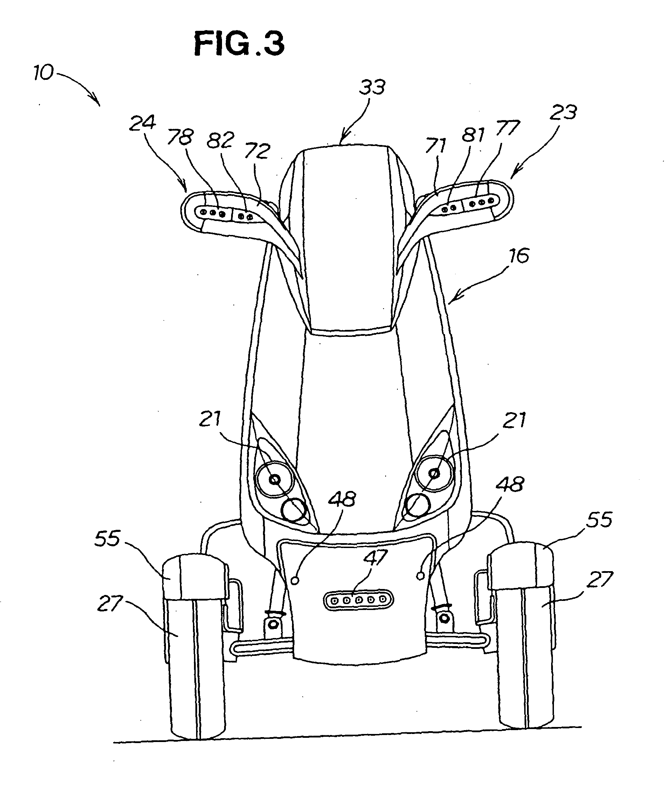

Fig. 3 is a front view of the small-sized motorized vehicle shown in Fig. 1;

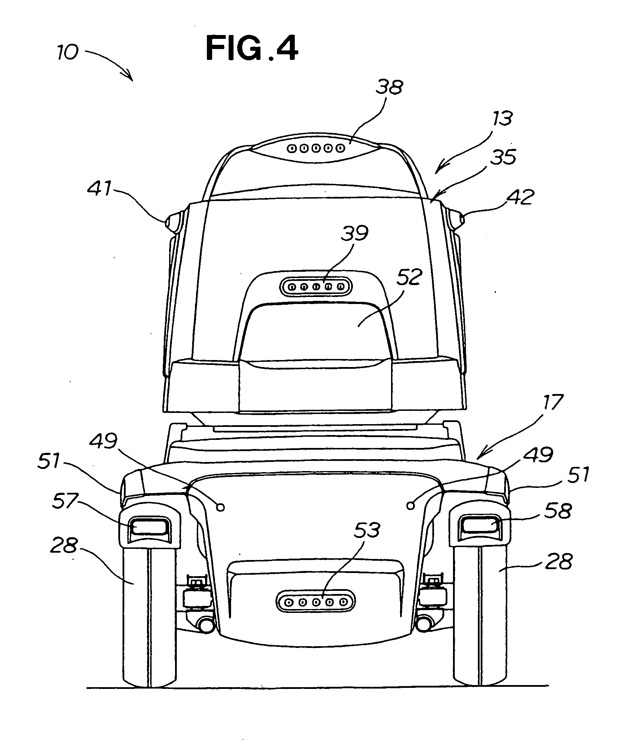

Fig. 4 is a rear view of the small-sized motorized vehicle shown in Fig. 1;

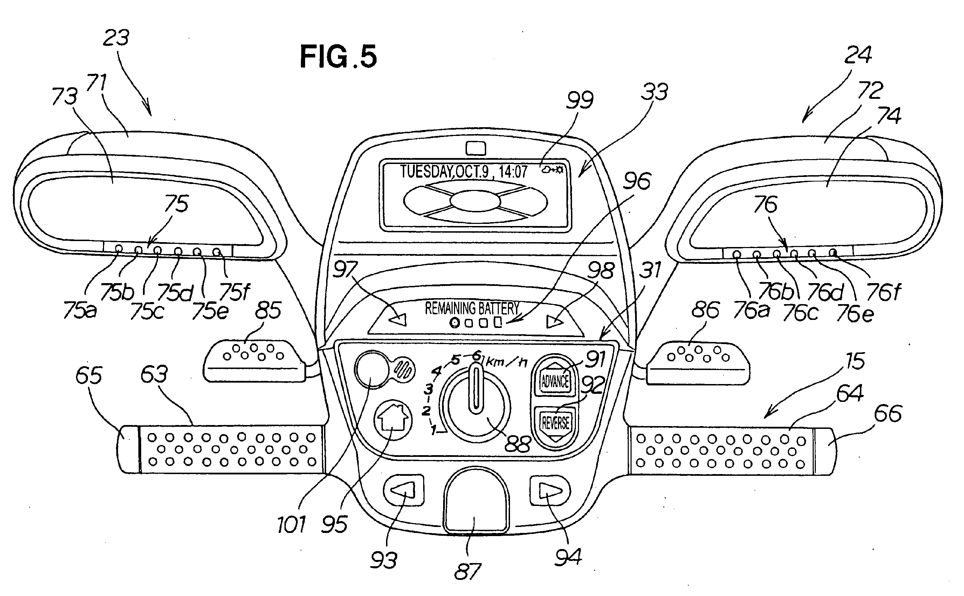

Fig. 5 is a plan view of a steering handle and rear-view mirrors of the small-sized motorized vehicle shown in Fig. 1;

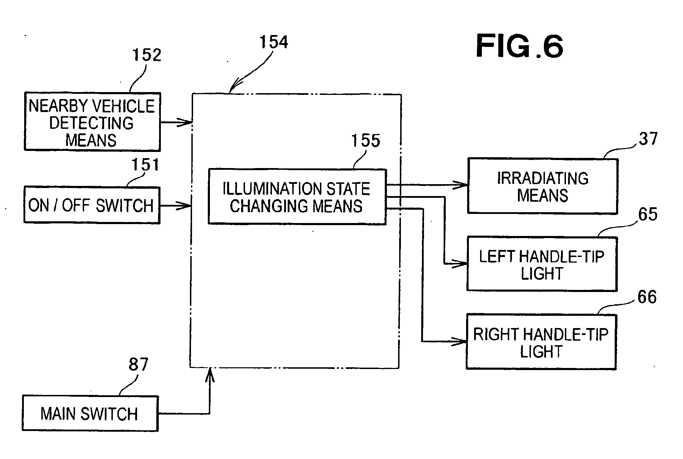

FIG. 6 is an electric block diagram of the small-sized motorized vehicle shown in FIG. 1;

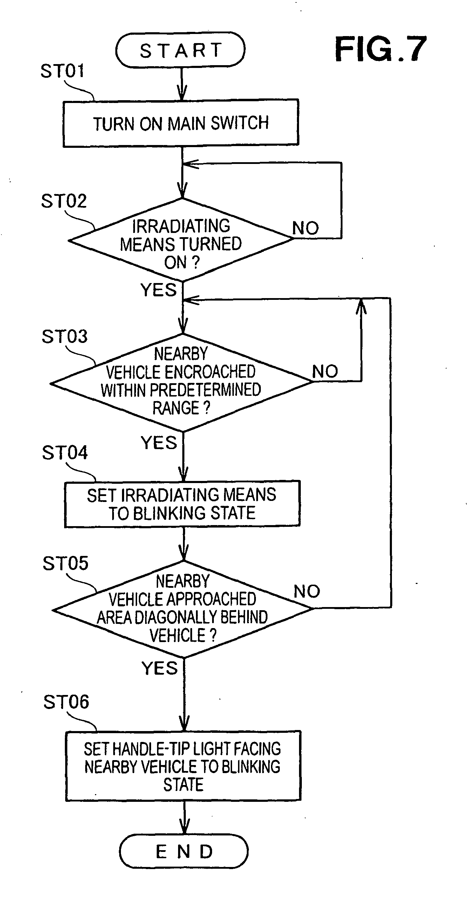

FIG. 7 is a flowchart showing the operation of a controller shown in FIG. 6;

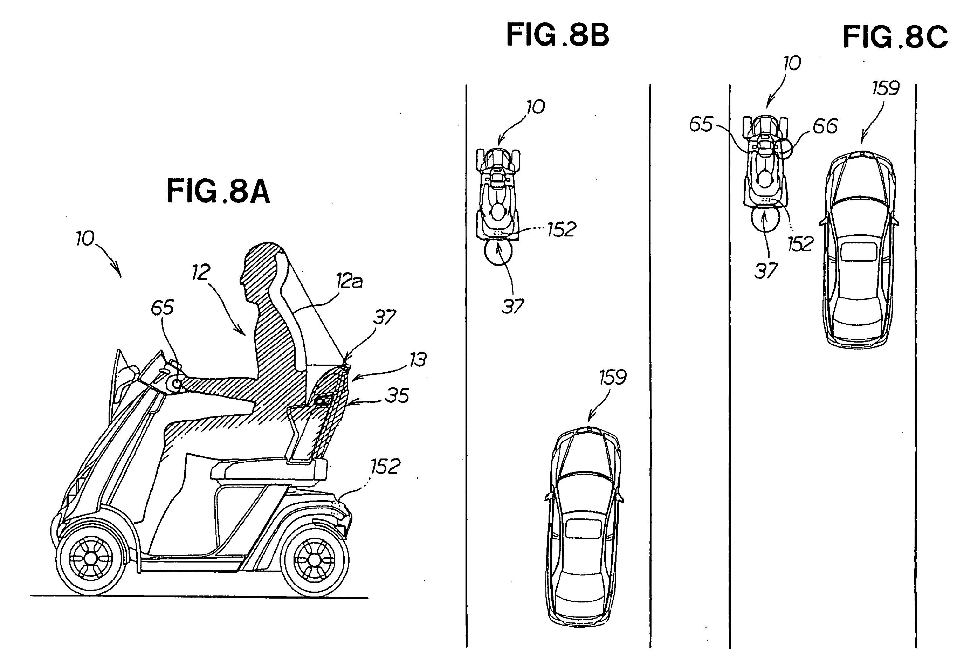

FIGS. 8A to 8C show the irradiating state of irradiating means in accordance with the position of a vehicle behind the small-sized motorized vehicle; and

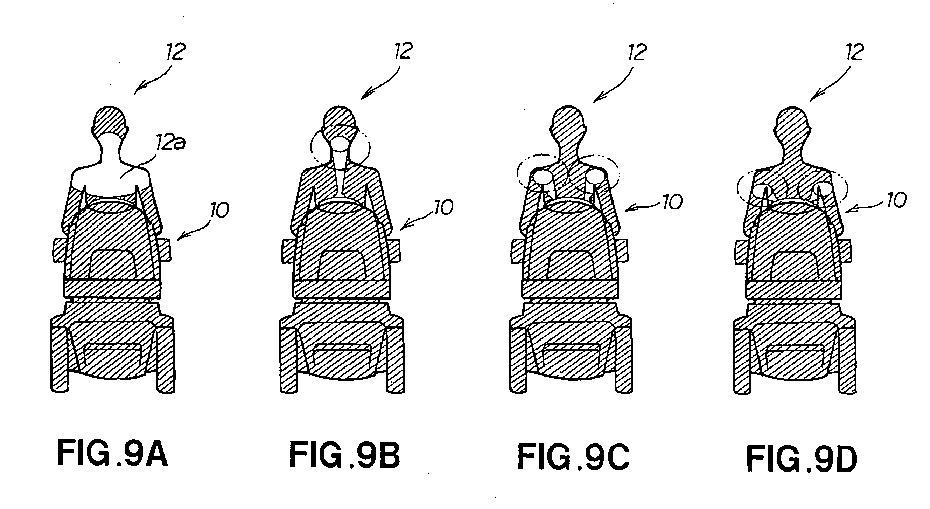

FIGS. 9A to 9D show how the irradiating means irradiates a vehicle occupant.

Referring to FIGS. 1 to 4, a small-sized motorized vehicle 10 includes a seat 13 on which a vehicle occupant 12 is seated; a floor step 14 on which the feet of the vehicle occupant 12 are placed; a steering handle 15 by which the vehicle occupant 12 steers the vehicle; a front cowl 16 that covers a front portion of a vehicle body; a rear cowl 17 that covers a rear portion of the vehicle body; side cowls 18, 18 that surround the portion under the seat 13 (only one of the side cowls is shown); headlights 21, 21 that are provided on the front side of the vehicle body and illuminate an area in front of the vehicle 10; left and right rear-view mirrors 23, 24 that are disposed at an upper portion of the front cowl 16 and by which the vehicle occupant 12 looks behind the vehicle; a battery 25 disposed in a lower portion of the floor step 14; an electric motor 26 that is disposed under the seat 13 and receives electric power from the battery 25; front wheels 27, 27 rotatably and steerably disposed in a front-lower portion of the vehicle body; rear wheels 28, 28 rotatably disposed in a rear-lower portion of the vehicle body, the rear wheels 28, 28 driven by the electric motor 26; a steering shaft 29 for steering the front wheels 27, 27, the upper end of the steering shaft 29 attached to the steering handle 15 and the lower end of the steering shaft 29 connected to the front wheels 27, 27; an operation panel 31 disposed in a central portion of the steering handle 15 and used to drive the vehicle; a navigation system 32 that is disposed in the front cowl 16 and has a GPS (global positioning system)-based position detection capability; and a display 33 that is provided in an upper central portion of the front cowl 16 and displays driving information and navigation information.

Further, the small-sized motorized vehicle 10 can travel only at 6 km/h (1.67 m/sec) at the maximum and has a restricted vehicle body size; i.e., is smaller than 109 cm in height, 70 cm in width, and 120 cm in total length. Specifically, the small-sized motorized vehicle is a motorized wheel chair used by the elderly or other people as transportation means. Therefore, such a small-sized motorized vehicle, when crossing a road, can hardly avoid by itself an approaching nearby vehicle. It is therefore very important to improve the visibility of such a small-sized motorized vehicle.

The seat 13 is rotatably attached to the vehicle body to make it easier for the vehicle occupant to step on and out of the vehicle. The seat 13 includes a seat cushion 34 that supports the waist of the vehicle occupant 12 and a seatback 35 that supports the back 12a of the vehicle occupant 12.

The seatback 35 includes stays 36, 36 that extend forward from left and right sides and support the ribs of the vehicle occupant 12; irradiating means 37 that is provided at the front upper end of the seatback and irradiates the back 12a of the vehicle occupant 12; a tail light 38 that is provided at the upper rear end of the seatback and undergoes a change in the state of illumination when the vehicle turns or crosses a road; a seat rear lamp 39 (FIG. 4) that is provided on the rear of the seatback and that illuminates concurrently when the headlights 21, 21 illuminate; left and right side turn indicators 41, 42 provided on the sides of the seatback 35; and side reflectors 43, 43 that are provided on the left and right sides of the seatback 35 and reflect light from nearby vehicles and other objects (only one of the side reflectors is shown).

The tail light 38 is warning means for informing pedestrians and nearby vehicles that the small-sized motorized vehicle is turning or crossing a road.

As shown in FIG. 2, the irradiating means 37 includes a plurality of light-emitting elements 37a to 37g, and the light-emitting elements 37a to 37g are disposed to irradiate the entire back 12a of the vehicle occupant 12.

The floor step 14 includes side lamps 44, 44 that are disposed on the left and right sides of the floor step and that illuminate concurrently when the headlights 21, 21 illuminate (only one of the side lamps is shown) and a baggage space 45 provided under the seat 13 and surrounded by the side cowls 18, 18.

As shown in FIG. 3, the front cowl 16 includes a front lamp 47 that illuminates concurrently when the headlights 21, 21 illuminate and front sonar units 48, 48 that detect parked vehicles in front of the vehicle and other obstacles. The front sonar units 48, 48 are obstacle detecting means for detecting obstacles that are in front of the vehicle and invisible to the vehicle occupant.

As shown in FIG. 4, the rear cowl 17 includes a rear lamp 53 that illuminates concurrently when the headlights 21, 21 illuminate; rear sonar units 49, 49 that detect obstacles behind the vehicle; rear fenders 51, 51 that cover the portions above the rear wheels 28, 28; a rear reflector 52 that is provided behind the rear fenders 51, 51 and receives and reflects light from nearby vehicles and other objects; and left and right rear turn indicators 57, 58. The rear sonar units 49, 49 are obstacle detecting means for detecting obstacles behind the vehicle.

The front wheels 27, 27 are puncture-resistant tires, and include wheel caps 54, 54 with reflective labels that make the vehicle more visible to pedestrians and nearby vehicles (only one of the wheel caps is shown) and front fenders 55, 55 that can rotate when the steering handle 15 is steered to cause the front wheels 27, 27 to turn.

Since the front fenders 55, 55 rotate along with the front wheels 27, 27, the vehicle occupant 12 can confirm the steering angle of the front wheels 27, 27 while the vehicle occupant 12 remains seated. The vehicle occupant can thus check the motion of the vehicle when backing up the vehicle.

The rear wheels 28, 28 include wheel caps 56, 56 with reflective labels that make the vehicle more visible to pedestrians and nearby vehicles, and the rear fenders 51, 51 formed integrally with the rear cowl 17 cover the portions above the rear wheels. The rear wheels 28, 28 are also puncture-resistant tires.

The steering shaft 29 is pivotably attached to the vehicle body with the portion of the steering shaft that is close to on the steering handle 15 inclined backward. That is, the center line C1 of the steering shaft 29, specifically, the portion closer to the steering handle 15 (upper end), is inclined backward.

FIG. 5 shows the steering handle and the rear-view mirrors of the small-sized motorized vehicle shown in FIG. 1.

The steering handle 15 is a substantially horizontal bar-shaped handle, and includes left and right handle grips 63, 64 provided at the left and right sides of the bar-shaped handle, and handle-tip lights 65, 66 that are provided at the ends of the handle grips 63, 64 and undergo a change in illumination state when the vehicle is turning or crossing a road.

The handle-tip lights 65, 66 are warning means for informing pedestrians and nearby vehicles that the small-sized motorized vehicle is turning or crossing a road.

The left and right rear-view mirrors 23, 24 are positioned in front of the handle grips 63, 64, as shown in FIGS. 3 and 5.

The left and right rear-view mirrors 23, 24 include left and right mirror housings 71, 72; left and right mirrors 73, 74 that are provided in the left and right mirror housings 71, 72 and show the situation behind the vehicle; left and right position indicator lamps 75, 76 having a plurality of light-emitting elements 75a to 75f, 76a to 76f disposed substantially in the horizontal direction in lower portions of the left and right mirror housings 71, 72, the left and right position indicator lamps 75, 76 indicating the position of an obstacle behind the vehicle; left and right front turn indicators 77, 78 (FIG. 3) formed in the front surfaces of the left and right mirror housings 71, 72; and left and right mirror-housing lights 81, 82 (FIG. 3) that are formed in the front surfaces of the left and right mirror housings 71, 72 and undergo a change in illumination state when the vehicle is turning or crossing a road.

The left and right position indicator lamps 75, 76 are configured in such a way that when the vehicle is moving backward and the rear sonar units 49, 49 detect an obstacle behind the vehicle, the light-emitting elements 75a to 75f, 76a to 76f undergo a change in illumination state in accordance with the position of the obstacle.

The left and right mirror-housing lights 81, 82 are warning means for informing pedestrians and nearby vehicles that the small-sized motorized vehicle is turning or crossing a road.

The operation panel 31 includes left and right travelling levers 85, 86 provided in front of the handle grips 63, 64; a main switch 87 for turning on the battery 25; a traveling speed setting knob 88 for setting the traveling speed; an advancing button 91 and a reversing button 92 for switching the traveling mode between advancing and reversing; left and right turn indicator buttons 93, 94 for turning on the left and right front turn indicators 77, 78, the left and right side turn indicators 41, 42, and the left and right rear turn indicators 57, 58; a navigation button 95 for activating and deactivating the navigation system 32; and an emergency call button 101 for requesting assistance in the event of an emergency.

The left and right travelling levers 85, 86, when operated, perform the same function and reduce the speed of the vehicle when firmly gripped.

The traveling speed setting knob 88 can set the speed from 1 to 6 km/h in a stepless manner. At a speed of 4 km/h or higher, steering the steering handle 15 causes automatic deceleration.

The display 33 includes a remaining battery capacity display 96 that for displaying the remaining amount of the battery 25; left and right turn indicator displays 97, 98 for displaying whether the left and right front turn indicators 77, 78, the left and right side turn indicators 41, 42, and the left and right rear turn indicators 57, 58 are illuminated or blinking; and a liquid crystal panel 99 for displaying driving information and navigation information.

FIG. 6 is an electric block diagram of the small-sized motorized vehicle shown in FIG. 1.

As shown in FIG. 6, in the small-sized motorized vehicle 10 (FIG. 1), the state of the main switch 87 described above, the state of an on/off switch 151 for turning the irradiating means 37 on and off, and information obtained from nearby vehicle detecting means (radar) 152 for detecting a nearby vehicle behind the small-sized motorized vehicle are inputted to a controller 154.

The controller 154 includes illumination state changing means 155 for changing the illumination state of the irradiating means 37 when the nearby vehicle detecting means 152 detects that a nearby vehicle enters a predetermined range around the small-sized motorized vehicle. The nearby vehicle detecting means 152 controls the illumination state of the irradiating means 37.

The illumination state changing means 155 changes the illumination state of the irradiating means 37 from an illuminated state to a blinking state, and also changes the.illumination state of the handle-tip lights 65, 66 from an illuminated state to a blinking state.

The operation of the illumination state changing means 155 in the controller 154 will be described based on the flowchart shown in FIG. 7 while referring to FIG. 6.

Step (hereinafter abbreviated to ST) 01: Turn on the main switch 87. At the same time, turn on the headlights 21, 21, the tail light 38, and other lights shown in FIG. 2 at night.

ST02: Determine whether or not the on/off switch 151 for turning the irradiating means 37 on and off is turned on. When the decision is YES, the control proceeds to ST03. When the decision is NO, the step ST02 is repeated.

ST03: The nearby vehicle detecting means 152 determines whether or not a nearby vehicle has approached a predetermined range around the vehicle 10. When the decision is YES, the control proceeds to ST04. When the decision is NO, the step ST03 is repeated.

ST04: The illumination state changing means 155 changes the illumination state of the irradiating means 37 from the illuminated state to the blinking state.

ST05: The nearby vehicle detecting means 152 determines whether or not a nearby vehicle has approached an area diagonally behind the vehicle 10. When the decision is YES, the control proceeds to ST06. When the decision is NO, the control returns to ST03. This decision is made in consideration of a case where the nearby vehicle has stopped or turned before approaching closer and no nearby vehicle is within the predetermined range around the vehicle 10.

ST06: Change the illumination state of one of the handle-tip lights 65, 66 that faces a nearby vehicle 159 (see FIG. 8C) from the illuminated state to the blinking state. The blinking state of the irradiating means 37 is maintained.

As described above, the vehicle body of the small-sized motorized vehicle 10 is equipped with a radar or other nearby vehicle detecting means 152 for detecting a nearby vehicle. When the nearby vehicle detecting means 152 detects that a nearby vehicle enters the predetermined range around the small-sized motorized vehicle, the illumination state of the irradiating means 37 is changed. It is thus possible to enhance the presence of the small-sized motorized vehicle 10.

FIGS. 8A to 8C show the illumination state of the irradiating means 37 of the small-sized motorized vehicle.

In FIG. 8A, the irradiating means (illuminating means) 37 is provided at the seatback 35 of the seat 13 as described above. The irradiating means 37 irradiates the back 12a of the vehicle occupant 12 to make the small-sized motorized vehicle 10 apparently larger.

In FIG. 8B, when the nearby vehicle detecting means 152 detects that the nearby vehicle 159 enters a predetermined range around the small-sized motorized vehicle, the illumination state of the irradiating means 37 is changed from the illuminated state to the blinking state to warn the nearby vehicle 159 that the small-sized motorized vehicle 10 is present. In the direction toward a side of the small-sized motorized vehicle 10, a side of the brightly-lit back 12a of the vehicle occupant 12 can be recognized.

In FIG. 8C, when the nearby vehicle 159 has approached a side of the vehicle 10, the illumination state of one of the handle-tip lights 65, 66 that faces the nearby vehicle 159 is changed from the illuminated state to the blinking state to further enhance the visibility, and indicate the presence, of the small-sized motorized vehicle 10.

That is, the small-sized motorized vehicle 10, in which the seat 13 on which the vehicle occupant 12 is seated is provided on the vehicle body, travels as a result of electric power being supplied from the battery 25 (FIG. 1) to the electric motor 26 and the drive force of the electric motor 26 being transmitted to the rear wheels 28, 28. The small-sized motorized vehicle 10 is of a restricted size; i.e., is smaller than 109 cm in height, 70 cm in width, and 120 cm in total length; and in consideration of this peculiarity of the vehicle, irradiating means for irradiating the back 12a of the vehicle occupant 12 is provided at the seatback.

The irradiating means 37 attached to the seatback 35 of the seat 13 can irradiate the vehicle occupant 12 to show their contour of the vehicle occupant 12 clearly and make the small-sized motorized vehicle 10 larger in appearance. As a result, the driver of the nearby vehicle 159 can easily find the small-sized motorized vehicle 10. That is, the visibility of the small-sized motorized vehicle 10 can be improved without affecting the layout of other parts within the restricted vehicle size.

FIGS. 9A to 9D show the states in which the light-emitting elements 37a to 37g of the irradiating means 37 shown in FIG. 2 irradiate the vehicle occupant 12.

In FIGS. 2 and 9A, the irradiating means 37 shown in FIG. 2, which is formed from a plurality of light-emitting elements 37a to 37g, changes the orientation of the irradiation from the light-emitting elements 37a to 37g to irradiate the entire area of the back 12a of the vehicle occupant 12.

In FIGS. 2 and 9B, the light-emitting elements 37c, 37d, 37e of the plurality of light-emitting elements 37a to 37g are disposed in a central portion and irradiate the vehicle occupant 12, aiming at the portion from the neck to the head. The areas indicated by the double-dashed lines in FIGS. 9B to 9D represent areas surrounding the areas irradiated by the light-emitting elements 37a to 37g.

In FIGS. 2 and 9C, the light-emitting elements 37b, 37f of the plurality of light-emitting elements 37a to 37g are disposed on the respective sides of the light-emitting elements 37c, 37d, 37e and irradiate the vehicle occupant 12, aiming at areas around the shoulder.

In FIGS. 2 and 9D, the light-emitting elements 37a, 37g of the plurality of light-emitting elements 37a to 37g are disposed at the respective left and right ends and irradiate the vehicle occupant 12, aiming at the underarm area.

That is, the irradiating means 37 is formed of the plurality of light-emitting elements 37a to 37g and disposed to irradiate the entire area of the back 12a of the vehicle occupant 12. In other words, since the entire area of the back 12a of the vehicle occupant 12 is irradiated with the light from the light-emitting elements 37a to 37g, the visibility can be further improved.

While the small-sized motorized vehicle of the present embodiment has been described with reference to a case where the illumination state of the irradiating means 37 is changed from the illuminated state to the blinking state and the illumination state of one of the handle-tip lights 65, 66 that faces a nearby vehicle is changed from the illuminated state to the blinking state as shown in FIGS. 8A to 8C, the illumination states are not necessarily changed from the illuminated state to the blinking state. Alternatively, blinking patterns of the irradiating means 37 and the handle-tip lights 65, 66 may be changed.

Further, the brightness of the illuminated irradiating means 37 and other lights may be increased, or the above actions may be combined as appropriate. For example, it is conceivable that the illumination state of the irradiating means 37 is changed from the illuminated state to the blinking state in accordance with how close a nearby vehicle is, and the brightness of the irradiation means is increased and the blinking state is changed to a fast blinking state when the nearby vehicle has come closer. It is thus possible to issue a further warning to the nearby vehicle informing that the small-sized motorized vehicle 10 is present.

While the small-sized motorized vehicle of the present embodiment has been described with reference to a case where the irradiating means 37 is formed from a plurality of light-emitting elements 37a to 37g as shown in FIG. 2 and the orientation of the irradiation from the light-emitting elements 37a to 37g is changed to irradiate the entire area of the back 12a of the vehicle occupant 12, a lens may be provided in each of the light-emitting elements and the orientation of the lens may be changed to irradiate the entire area of the back of the vehicle occupant.

The irradiating means 37 may be provided in a portion close to the seatback (an armrest, for example) from which the back 12a of the vehicle occupant 12 can be irradiated.

While the present embodiment has been described with reference to a case where the drive force of the electric motor 26 is transmitted to the rear wheels 28, 28, the drive force may be transmitted to the front wheels.

While the present embodiment has been described with reference to a case where the radar 152 is used to detect nearby vehicles and other subjects, the radar 152 is not necessarily used. Other communication means (an infrared camera, for example) may be used.

A small-sized motorized vehicle having improved visibility to nearby vehicles and other subjects. The small-sized motorized vehicle includes irradiating means (37) provided at a seatback (35) or a portion close thereto. The irradiating means irradiates the back of a vehicle occupant.

## Claims

1. A small-sized motorized vehicle comprising:
a seat (13) provided on a vehicle body for use by a vehicle occupant (12),
an electric motor (26) to which electric power is supplied from a battery; and
wheels (27, 28) that are caused to rotate by a drive force of the electric motor (26) to drive the small-sized motorized vehicle (10);
wherein irradiating means (37) is provided on a seatback (35) of the seat or a portion close to the seatback (35) **characterized in that** the irradiating means (37) is disposed for irradiating the back (12a) of the vehicle occupant (12), and
that the irradiating means (37) is formed from a plurality of light-emitting elements (37a to 37g) wherein the orientation of the irradiation from the light-emitting elements (37a to 37g) is changeable to irradiate the entire area of the back (12a) of the vehicle occupant (12) above the seatback (35), or a lens is provided in each of the light-emitting elements and the orientation of the lens is changeable to irradiate the entire area of the back (12a) of the vehicle occupant (12) above the seatback (35).

2. The motorized vehicle of claim 1, further comprising nearby vehicle detecting means (152) for detecting a vehicle near the motorized vehicle, the nearby vehicle detecting means being proceed on the vehicle body,
wherein the nearby vehicle detecting means changes the illumination state of the irradiating means on detecting that the nearby vehicle has encroached to within a predetermined range around the motorized vehicle.

3. The motorized vehicle of claim 1, wherein first light-emitting elements (37c, 37d, 37e) of the plurality of light-emitting elements (37a to 37g) are disposed in a central portion to irradiate the portion from the neck to the head,
second light emitting elements (37b, 37f) of the plurality of light-emitting elements (37a to 37g) are disposed on the respective sides of the first light-emitting elements (37c, 37d, 37e) to irradiate the areas around the shoulders, and
third light-emitting elements (37a, 37g) of the plurality of light-emitting elements (37a to 37g) are disposed at the respective left and right ends to irradiate the underarm areas.

## Patentansprüche

1. Motorisiertes Kleinfahrzeug, umfassend:
einen Sitz (13), der an einem Fahrzeugaufbau zur Verwendung durch einen Fahrzeugbenutzer (12) vorgesehen ist,
einen Elektromotor (26), dem von einer Batterie elektrischer Strom zugeführt wird; und
Räder (27, 28), die durch Antriebskraft des Elektromotors in Drehung versetzt werden, um das motorisierte Kleinfahrzeug (10) anzutreiben;
worin ein Strahlermittel (37) an einer Rückenlehne (35) des Sitzes oder einem Abschnitt in der Nähe der Rückenlehne (35) vorgesehen ist,
**dadurch gekennzeichnet, dass** das Strahlermittel (37) angeordnet ist, um den Rücken (12a) des Fahrzeugbenutzers (12) anzustrahlen, und
dass das Strahlermittel (37) aus einer Mehrzahl von lichtabgebenden Elementen (37a bis 37g) gebildet ist, worin die Orientierung der Strahlung von den lichtabgebenden Elementen (37a bis 37g) veränderbar ist, um den gesamten Bereich des Rückens (12a) des Fahrzeugbenutzers (12) oberhalb der Rückenlehne (35) anzustrahlen, oder eine Linse in jedem der lichtabgebenden Elemente vorgesehen ist und die Orientierung der Linse veränderbar ist, um den gesamten Bereich des Rückens (12a) des Fahrzeugbenutzers (12) oberhalb der Rückenlehne (35) anzustrahlen.

2. Das motorisierte Fahrzeug von Anspruch 1, das ferner Nachbarfahrzeugerfassungsmittel (152) aufweist, um ein Fahrzeug in der Nachbarschaft des motorisierten Fahrzeugs zu erfassen, wobei das Nachbarfahrzeugerfassungsmittel an dem Fahrzeugaufbau vorgesehen ist,
wobei das Nachbarfahrzeugerfassungsmittel den Beleuchtungszustand des Strahlermittels ändert, wenn es erfasst, dass das benachbarte Fahrzeug in einen vorbestimmten Bereich um das motorisierte Fahrzeug herum eingefahren ist.

3. Das motorisierte Fahrzeug von Anspruch 1, worin erste lichtabgebende Elemente (37c, 37d, 37e) der Mehrzahl von lichtabgebenden Elementen (37a bis 37g) in einem Mittelabschnitt angeordnet sind, um den Abschnitt vom Hals bis zum Kopf anzustrahlen,
zweite lichtabgebende Elemente (37b, 37f) der Mehrzahl von lichtabgebenden Elementen (37a bis 37g) an jeweiligen Seiten der ersten lichtabgebenden Elemente (37c, 37d, 37e) angeordnet sind, um die Bereiche um die Schultern herum anzustrahlen, und
dritte lichtabgebende Elemente (37a, 37g) der Mehrzahl von lichtabgebenden Elementen (37a bis 37g) an jeweiligen linken und rechten Enden angeordnet sind, um die Unterarmbereiche anzustrahlen.

## Revendications

1. Véhicule motorisé de petite taille comprenant :
un siège (13) ménagé sur une carrosserie de véhicule à utiliser par un occupant du véhicule (12),
un moteur électrique (26) auquel une alimentation électrique est fournie par une batterie ; et
des roues (27, 28) qui sont mises en rotation par une force d'entraînement du moteur électrique (26) pour entraîner le véhicule motorisé de petite taille (10) ;
dans lequel des moyens de rayonnement (37) sont ménagés sur un dossier (35) du siège ou une portion proche du dossier (35),
**caractérisé en ce que** les moyens de rayonnement (37) sont disposés de façon à irradier le dos (12a) d'un occupant du véhicule (12) et
**en ce que** les moyens de rayonnement (37) sont formés d'une pluralité d'éléments électroluminescents (37a à 37g), dans laquelle l'orientation du rayonnement provenant des éléments électroluminescents (37a à 37g) peut être modifiée pour irradier toute la zone du dos (12a) de l'occupant du véhicule (12) au dessus du dossier (35) ou une lentille est placée dans chacun des éléments électroluminescents et l'orientation de la lentille peut être modifiée pour irradier toute la zone du dos (12a) de l'occupant du véhicule (12) au dessus du dossier (35).

2. Véhicule motorisé selon la revendication 1, comprenant en outre un système de détection de véhicule à proximité (152), pour détecter un véhicule près du véhicule motorisé, le système de détection de véhicule à proximité étant actionné sur la carrosserie du véhicule,
dans lequel le système de détection de véhicule à proximité change l'état d'éclairage du système de rayonnement lors de la détection qu'un véhicule proche a empiété sur une gamme prédéterminée autour du véhicule motorisé.

3. Véhicule motorisé selon la revendication 1, dans lequel les premiers éléments électroluminescents (37c, 37d, 37e) de la pluralité d'éléments électroluminescents (37a à 37g) sont disposés dans une partie centrale pour irradier la portion du cou à la tête,
de seconds éléments électroluminescents (37b, 37f) de la pluralité d'éléments électroluminescents (37a à 37g) sont disposés sur les côtés respectifs des premiers éléments électroluminescents (37c, 37d, 37e) pour irradier les zones autour des épaules, et
de troisièmes éléments électroluminescents (37a, 37g) de la pluralité d'éléments électroluminescents (37a à 37g) sont disposés aux extrémités gauche et droite respectives pour irradier les zones sous les bras.
